# EUROPÄISCHE PATENTSCHRIFT

(11) **EP 2 774 811 B1**
(45) Veröffentlichungstag und Bekanntmachung des Hinweises auf die Patenterteilung: **10.04.2019**
(21) Anmeldenummer: 14401029.5
(22) Anmeldetag: 24.02.2014
(51) Int. Cl.: B60P 1/43, B60P 1/16

(54) **Fahrzeug mit schwenkbeweglicher Ladefläche**
Vehicle with a pivoting loading surface
Véhicule doté d'une surface de chargement pivotante

(30) Priorität: 08.03.2013 DE 102013102330
(43) Veröffentlichungstag der Anmeldung: 10.09.2014
(73) Patentinhaber: Begemann, Carl-Ludwig, 26409 Wittmund (DE)
(72) Erfinder: Begemann, Carl-Ludwig, 26409 Wittmund (DE)
(74) Vertreter: Scheffler, Jörg

(56) Entgegenhaltungen:
- DE-A1- 10 201 625
- GB-A- 2 425 758
- GB-A- 2 431 630

## Beschreibung

Die Erfindung betrifft ein insbesondere für Einsatzzwecke in der Landwirtschaft bestimmtes Transportfahrzeug mit einer zwischen einer im Wesentlichen horizontalen Transportposition und einer geneigten Entladeposition um eine horizontale Schwenkachse schwenkbeweglichen Ladefläche zum Transport von Heu- oder Strohballen oder von einer Einheit verbundenen Erntegütern nach dem Oberbegriff des Patentanspruches 1.

Derartige Transportfahrzeuge sind als Anhänger oder als selbstfahrende LKW vornehmlich für landwirtschaftliche Zwecke mit einer kippbaren Plattform als Ladefläche ausgestattet. Das Transportfahrzeug wird dabei durch ein externes Ladefahrzeug beladen und entladen. Dabei eignen sich derartige Transportfahrzeuge sowohl gleichermaßen zum Transport über kurze Distanzen auf landwirtschaftlichen Nutzflächen als auch über weite Strecken auf öffentlichen Straßen.

Dabei ist das Transportfahrzeug für nahezu alle beliebige schütt- oder rieselfähige Güter oder auch Stückgüter sowie Erzeugnisse und insbesondere für zu Einheiten verbundene Heu- oder Strohballen bzw. andere Erntegüter, die auch von einer Folie eingehüllt sein können, geeignet sowie für in Ballen gepresste Güter, auch stapelbar, wie Entsorgungsgüter, beispielsweise Kunststoffe, Papier, Pappe oder andere in Ballen geformte Güter aus Übersee.

Bei den in der Praxis vielfach eingesetzten Ballentransportwagen wird dieser durch ein externes Ladefahrzeug von der Seite her beladen. In entsprechender Weise erfolgt der Entladevorgang ebenfalls durch ein externes Ladefahrzeug durch seitliche Entnahme einzelner oder mehrerer gestapelter Ballen. Oftmals werden mehrere Ballentransportwagen aneinander gekoppelt.

In der Landwirtschaft fällt zur Erntezeit auf Grünland und Ackerland eine große Menge Erntegut an, welches in große, als Hochdruckballen bezeichnete Ballen mit den typischen Abmessungen von 60 cm bis 90 cm Höhe, 80 cm oder 120 cm Tiefe und einer variablen Länge von bis zu ca. 250 cm verpresst wird. Das Gewicht dieser Ballen schwankt von ca. 200 kg bis in den Bereich von ca. 450 kg. Die Ballen werden von dem Ladefahrzeug seitlich an ihrer langen Seite mit einer Gabel aufgenommen.

Die Ballen müssen dann möglichst schnell vom Feld abgefahren werden, um sie vor dem nächsten Regen zu schützen und auch um das Feld für nachfolgende Arbeiten frei zu bekommen. Die Ballen werden anschließend zur Zwischenlagerung am Feldende, zur Speicherung auf dem Hof in einer Halle, zur industriellen Verwertung oder zu einer anderen Jahreszeit zu einer anderen Betriebsstelle gefahren. Es schränkt die Nutzung eines Ballentransportwagens stark ein, wenn er am Zielort nicht sofort entladen werden kann.

Vorbedingung für eine Verwertung der Ballen gleich welchen Erntegutes, ist, dass das gepresste Erntegut nicht vom Regen durchnässt wird. Auch schon bei wenig Regen dringt Regenwasser in den Ballen ein, trocknet wegen der hohen Pressdichte nicht mehr und setzt Schimmel an. Daher ist eine hohe Berge- und Transportleistung sehr erwünscht.

Die Ballen und Rundballen werden ausschließlich mit Maschinen bewegt. Die kleinen Hochdruckballen, welche mit der Hand verarbeitet werden, haben keine Bedeutung mehr in der Landwirtschaft und werden hier daher nicht weiter genannt.

Im Allgemeinen werden zum Abtransport der Ballen vom Feld zum Lagerplatz beispielsweise in einem Hofgebäude universelle, herkömmliche landwirtschaftliche Anhänger benutzt. Oft werden alte landwirtschaftliche Anhänger für diese Arbeit eingesetzt, die sich aufgrund ihres Alters nicht mehr für den Korntransport eignen. Der gegebenenfalls erforderliche Umbau für den Ballentransport kann unter Umständen sehr aufwendig sein. Wannenkipper eignen sich ohnehin nicht für diese Aufgabe.

Die Ballen sind aufgrund ihrer Dichte sehr schwer, werden dazu hoch geladen und haben somit einen hohen Schwerpunkt.

Es ist auch bereits daran gedacht worden, für den Straßenverkehr bestimmte LKW-Anhänger für diese Arbeit einzusetzen, die hierzu entsprechend der Bestimmungen und der Anforderungen umgebaut werden müssen. Abseits befestigter Straßen hat sich deren Einsatz jedoch bereits als problematisch erwiesen. Insbesondere eignet sich die Bereifung nur sehr eingeschränkt für die Feldarbeit.

Spezielle Ladewagen für Quaderballen oder Rundballen, die die Ballen auf dem Feld selbsttätig aufnehmen und am Einlagerungsort wieder abgeben, sind zwar bekannt, werden aber wegen der hohen Anschaffungskosten, der aufwendigen Technik und wegen der geringen Transportmenge an Ballen über eine größere Entfernung nicht eingesetzt.

Die DE 102 01 625 A1 zeigt ein Kipperfahrzeug mit einer zwischen einer horizontalen Transportposition und einer geneigten Entladeposition um eine horizontale Schwenkachse schwenkbeweglichen Ladefläche. Die Ladefläche ist im Heckbereich durch eine schwenkbewegliche, eine Rückwand bildende Heckklappe begrenzt, welche in der Transportposition mit der Ladefläche einen stumpfen Winkel einschließt und die in der Entladeposition mit der Ladefläche flächenbündig positionierbar ist, sodass sich eine durchgehende Laderampe ergibt.

Aus der GB 2431630 A ist ein gattungsgemäßes Transportfahrzeug bekannt, bei dem die Schwenkachse im Heckbereich des Transportfahrzeuges hinter einer Hinterachse mit einem Abstand zum Boden angeordnet ist, der geringer ist als der Durchmesser eines Hinterrades. Die Ladefläche ist im Heckbereich durch eine schwenkbewegliche, eine Rückwand bildende Heckklappe begrenzt, welche in der Transportposition mit der Ladefläche einen stumpfen Winkel einschließt und die in der Entladeposition mit der Ladefläche flächenbündig positionierbar ist.

Aus der GB 2425758 A ist ebenfalls ein solches Transportfahrzeug bekannt. Die schwenkbewegliche Heckklappe kann in einer Entladeposition mit der Ladefläche flächenbündig und mit einer Abschlusskante auf dem Boden positioniert werden.

Aus der DE 20 2007 019 318 U1 ist ein Transportwagen für landwirtschaftliches Stückgut, insbesondere aus landwirtschaftlichem Erntegut wie Stroh oder Silage gepressten Ballen, mit einer das Stückgut untergreifenden und von Längs- sowie Querseitenteilen begrenzten Ladefläche bekannt. Dabei ist der Transportraum durch die geöffneten Längsseitenwände zugänglich. Hierzu ist eine Längsseitenwand aus einer bodennahen Öffnungsstellung in eine zumindest eine obere Lage des gestapelten Stückgutes erfassende und seitlich sichernde Schließstellung verlagerbar. Der zum Beladen und Entladen erforderliche Aufwand ist dabei vergleichsweise groß.

Gemäß der DE 33 12 585 A1 ist ein Transportsystem für in runder oder quaderförmiger Form vorliegende Pressballen vorgesehen. Auf einem Transportwagen ist dabei eine Vielzahl von Ballenaufnahmeboxen vorgesehen, die die Rundballen in geordneter Struktur aufnehmen. In diesen Boxen sind die Rundballen einerseits transportierbar und andererseits ist das System so ausgelegt, dass die zu einem Container verbundenen Boxen auch zur Aufbewahrung der Rundballen bis zu deren bestimmungsmäßigen Gebrauch nutzbar sind.

Ferner wird in der DE 200 22 895 U1 ein als Sammelfahrzeug ausgebildeter Transportwagen beschrieben, dessen Rahmen eine Aufnehmervorrichtung und eine Verschiebebahn zur Aufnahme und zur Verschiebung der Silageballen aufnimmt. Hierzu weist eine Aufnehmervorrichtung zwei an einem Steg sitzende Tragarme auf, die einen Silageballen mit parallel zu den Tragarmen ausgerichteter Achse aufnehmen, wobei der Steg hochschwenkbar ist und den Silageballen über die Seitenwand der als Rollenbahn ausgebildeten Verschiebebahn hebt.

Es werden auch Transportanhänger angeboten, die eine große flache Ladefläche mit Ladegitter haben, wobei die Ladegitter eine Kettenabstützung aufweisen. Sie werden durch externe Lademaschinen beladen, müssen aber auch wieder durch Ladefahrzeuge entladen werden. Die Kettenabstützung der Ladegitter ist sehr hinderlich beim Beladen/Entladen und führt zu Verzögerungen.

Der Erfindung liegt die Aufgabe zugrunde, einen Transportwagen zu schaffen, der eine wesentliche Vereinfachung des Be- und Entladevorganges, insbesondere auch bei unebenem Untergrund oder bei Hindernissen ermöglicht.

Die erstgenannte Aufgabe wird erfindungsgemäß mit einem Transportfahrzeug gemäß den Merkmalen des Anspruches 1 gelöst. Die weitere Ausgestaltung der Erfindung ist den Unteransprüchen zu entnehmen.

Erfindungsgemäß ist also ein Transportfahrzeug vorgesehen, bei dem die Heckklappe mittels eines Hebels schwenkbeweglich ausgeführt ist, indem der Hebel ein Auflager hat, auf dem die Heckklappe nach oben frei beweglich aufliegt. Indem die Ladefläche gemeinsam mit der diese verlängernden Heckklappe in die geneigte Be- und Entladeposition verschwenkt wird, in welcher die Heckklappe mit einer Abschlusskante auf dem Boden aufliegt, und es erfindungsgemäß möglich ist, dass die beladene Ladefläche noch höher über Hindernisse angehoben werden kann, selbst wenn die Rückwand bereits den Boden berührt hat, wird der Be- und Entladevorgang wesentlich vereinfacht, weil die Schwenkachse der Ladefläche nur geringfügig höher als die Hinterachse angeordnet ist und daher der Neigungswinkel der Ladefläche in der Entladeposition gering ist. Hierdurch hat das Transportfahrzeug eine hohe Ladekapazität und ist leicht und schnell zu beladen. Dabei kann das Transportfahrzeug gleichermaßen mit einem Antrieb selbstfahrend oder als Anhänger ausgeführt sein. Die ebene Ladefläche ermöglicht auch die Beladung auf Paletten, die mit Gabelstaplern auf die Ladefläche aufgesetzt werden und von dieser abgleiten können.

Beim Abkippen erfüllt die Heckklappe die Aufgabe der verlängerten Ladefläche. Ist der auskragende Teil der Heckklappe aus der Senkrechten nach unten in die Waagerechte geklappt, um mit der Ladefläche eine ebene Fläche zu bilden, dann ist diese Fläche auch für die Beladung nutzbar.

Darüber hinaus ist das Transportfahrzeug im Straßenverkehr und auf dem Hofgelände leicht und sicher zu bewegen. Aufgrund des reduzierten Schwerpunktes, der das Kippen und Abladen im Gelände vereinfacht, lässt sich so beispielsweise auch eine Fahrgeschwindigkeit von 60 km/h bis 80 km/h und darüber hinaus realisieren, sodass sich das Transportfahrzeug sogar für Autobahnen eignet.

Vorzugsweise weist die Ladefläche eine große ebene Plattform auf, die in der Breite den gängigen Breiten der Transportfahrzeuge von 2,50 m im Straßenverkehr entspricht. Somit können zwei Ballenstapel mit jeweils 1,20 m Tiefe nebeneinander positioniert werden.

Die Ladefläche ist dabei schwenkbeweglich derart gelagert, dass diese mit einem einzigen Freiheitsgrad beweglich angeordnet ist. Die Position der Schwenkachse der Ladefläche ist dabei bevorzugt so gewählt, dass das hintere Ende der Ladefläche bei einem Kippwinkel von etwa 25° bis 30° den Boden fast berührt. Auf diese Weise können die Ballen von der Ladefläche gleiten und auf dem Boden abgelegt werden, wobei die Ballen kaum rollen oder stürzen.

Die Schwenkachse der Ladefläche ist an dem Rahmen des Transportfahrzeuges tief liegend angeordnet, um den Schwerpunkt des Gewichtes beim Kippen bzw. Abladen auf das Chassis in vorteilhafter Weise zu übertragen und um damit insbesondere im Gelände einer instabilen Lage des gesamten Transportfahrzeuges und somit einer Kippgefahr vorzubeugen. Hierzu ist die Schwenkachse gemäß einer bevorzugten Variante in etwa auf derselben Höhe wie die Hinterachse oder lediglich geringfügig höher angeordnet.

Um die Verwindung der Ladefläche gering zu halten, sind Hubzylinder auf jeder Transportfahrzeugseite notwendig, die vorzugsweise doppeltwirkend ausgestaltet sind und somit Drucklasten nicht nachgeben. Eine unerwünschte Verwindung der Ladefläche in der Entladeposition unter dem Einfluss der Last des Ladegutes kann so vermieden werden. Wegen des geringen Hubweges sind einstufige Zylinder vorteilhaft.

Die Ladefläche überragt die Hinterachse des Chassis um ca. 1/3 der gesamten Länge. Bei einer Gesamtlänge der Ladefläche von beispielsweise 10 m wird diese von der Hinterachse in einen ersten, auskragenden Teil von ca. 3 m Länge und einen zweiten Teil von ca. 7 m Länge unterteilt, was im Wesentlichen auch dem Radstand des Transportfahrzeuges entspricht. Dadurch ist das Transportfahrzeug im Anhängerbetrieb auf dem Bauernhofgelände und im Straßenverkehr durch den geringen Wendekreis leicht zu handhaben und zu bewegen.

Damit der Ballentransportwagen auf dem Feld keine tiefen Spuren hinterlässt, soll der Ballentransportwagen mit hohen und breiten Niederdruckreifen ausgestattet sein.

Vorzugsweise dient zum Öffnen und Schließen der Rückwand ein Hydraulikzylinder, wobei dieser mit einem drehbar gelagerten Verbindungsteil gekuppelt ist und auf dem die Rückwand nach oben frei beweglich aufliegt. Auf diese Weise ist es möglich, dass die beladene Ladefläche noch höher über Hindernisse angehoben werden kann, selbst wenn die Rückwand bereits den Boden berührt hat.

Besonders bevorzugt kann die Ladefläche mit Begrenzungselementen ausgestattet werden. Beispielsweise kann vorderseitig der Ladefläche ein Ladegitter als Schiebeschutz angebracht werden, welches den Fahrer bei starkem Bremsen gegenüber einer unerwünschten Verlagerung der Ladung schützt.

In dieses Ladegitter integriert oder der Ladefläche vorgebaut ist eine begehbare Trittfläche, die als Arbeitsbalkon oder -bühne den gewünschten Raum zur Fixierung und zur Ablage von Zurrgurten schafft. Muss die Ladung zur Sicherung von oben begangen werden, so ist es vorteilhaft, wenn das Ladegitter mit Trittstufen und Haltegriffen so gestaltet ist, dass die Ladung gefahrlos bestiegen werden kann.

Die Ladefläche ist wahlweise seitlich mit oder ohne Bordwände, nur mit einer Schiebeschutz-Reling, ausgestattet, wobei selbstverständlich auch feste oder klappbare Bordwände bzw. einsteckbare Bordwände realisierbar sind, die in vorteilhafter Weise zumindest auf der linken Verkehrsseite des Transportfahrzeuges angebracht sind, um den entgegenkommenden oder auch überholenden Verkehr zu schützen.

Besonders vorteilhaft ist es auch, beidseitig fest verbundene Seitenwände zu verwenden, wobei die Seitenwände beidseitig geschlossen, also ohne Durchbrechungen ausgeführt sind und bis auf Ladehöhe mit ausgestaltetem Dach als Regenschutz und zur Ladungssicherheit verbunden sein können.

Der Laderaum ist ähnlich einer Röhre geschlossen ausgeführt. Die Ballen oder Ballenstapel werden dann direkt von hinten quer zur Fahrtrichtung ausgerichtet hineingeschoben, wobei die Ballenlänge möglichst weitgehend der Fahrzeugbreite entsprechen sollte. Alternativ erfolgt das seitliche Beladen im hinteren Bereich mit einer Orientierung seitlich längs zur Fahrtrichtung der Ballen durch eine große Tür in den Laderaum und dann durch Umsetzen der leeren Lademaschine nach hinten ins Heck, um so die Ballen ebenfalls in den Laderaum zu schieben. Hiermit ergibt sich eine Laderaumfüllung mit wenig Hohlräumen. Ist solch ein geschlossener Laderaum mit einem Rollboden oder dergleichen ausgestattet, so kann die Ladung ebenfalls von einem Ladefahrzeug einzeln entnommen werden.

Wenn der geschlossene Laderaum mit einer festen Tür verschlossen wird, erübrigt sich ein Festzurren der Ballenladung sofern oberhalb der Ladung zum Dach nur ein geringer Abstand bleibt oder das Dach entsprechend abgesenkt wird. Dadurch ergibt sich ein Zeit- und auch ein Sicherheitsgewinn.

Dabei erweist es sich als besonders praxisgerecht, dass das Ladegut als Ballen oder Ballenstapel von hinten in den Laderaum geschoben werden kann und das Entladen durch bloßes Abkippen der Ladefläche realisiert werden kann, ohne dass das Ladegut dabei unkontrolliert durcheinander stürzt.

Wenn eine der beiden Seitenwände feststehend ausgeführt ist, kann die Höhe der Bordwand größer gewählt werden als eine einzelne Ballenhöhe. Somit kann dieser Vorgang bei der Beladung und der Entladung von der rechten Seite mit einem Ladefahrzeug erleichtert werden, indem man durch das verschiedentliche Anfahren des Ladefahrzeuges beim Beladen die Ballenstapel gegen diese Bordwand stößt und diese somit für den Transport genau zentriert und fixiert wird. Die Ballen liegen für den Straßentransport gerade übereinander und stehen nicht über die erlaubte Transportfahrzeugbreite hinaus. Die Ladung kann daher gut und sicher festgezurrt werden, ohne dass sich die Gurte durch Verrutschen der Ballen selbsttätig lösen.

Zum Abladen durch Abkippen hat es sich als besonders vorteilhaft erwiesen, wenn der Ladeflächen-Boden eine reibungsmindernde Oberflächenbeschaffenheit aufweist, insbesondere also möglichst glatt ist. Hierdurch gleitet die Ladung schon bei einer vergleichsweise geringen Neigung der Ladefläche zuverlässig und zügig ab. Die Ladefläche ist daher insbesondere mit einem hochgleitfähigen Belag ausgestattet. Die Ladegüter gleiten in Abhängigkeit ihrer Art, Struktur und ihrer Feuchtigkeit verschieden schnell, leicht und früh.

Obwohl ein unversehrtes Abrutschen der gesamten Ballenstapelladung nicht zwingend erforderlich ist, kann in vorteilhafter Weise der Boden des Ballentransportwagens mit einem Edelstahl-Belag ausgestattet sein. Ein Belag auf Teflon-Basis ist ebenfalls vorteilhaft realisierbar. Somit rutschen die geladenen Ballenstapel von der Ladefläche, ohne dass sie umkippen, ins Rollen kommen oder unkontrolliert herabstürzen.

Indem eine unkontrollierte und verstreute Verteilung vermieden wird, wird das Wiederaufnehmen der einzelnen Ballen wesentlich erleichtert, die dann direkt und mit einer gewünschten Ausrichtung vor dem Ladefahrzeug liegen und zügig aufgenommen werden können. Zudem lässt sich die Ladung auf eine vergleichsweise kleine Bodenfläche abladen.

Eine seitliche Reling oder eine Bordwand kann zum Abladen mit einer Ladegabel als Widerlager dienen.

Gemäß einer weiteren besonders bevorzugten Ausführungsform weist die Ladefläche einen Signalträger zur Aufnahme von Lichtsignalen und Kennzeichnungsmitteln auf, welcher unterhalb der Transportebene der Ladefläche um eine im Wesentlichen horizontale Achse schwenkbeweglich angeordnet ist. Dieser kann mit zumindest einem Hubzylinder zum Bewegen der Ladefläche kinematisch gekoppelt sein und außerdem einen hinteren Unterfahrschutz bilden. So wird der Signalträger zugleich mit der Ladefläche gekippt, sodass der Signalträger mit dem Unterfahrschutz und der Beleuchtung eingeschwenkt wird.

Durch die große Ladekapazität, die relativ geringen Herstellungskosten und die sichere Auflage für kleine wie große sowie auch runde Ballen eignet sich der Wagen auch sehr gut für den Transport der aufgeladenen Ballen vom Feld zum Hof. Auf dem Hof werden die Ballen dann einfach abgekippt. Der Wagen wird nicht wie bei einer Einzelentladung blockiert, sondern kann bereits Minuten später nach dem Abkippen sofort wieder zum Feld zurückfahren, während die abgekippten Ballen einzeln mit einem Ladefahrzeug in das Gebäude befördert werden. Diese Arbeit wird von einer weiteren Arbeitskraft erledigt, sodass Arbeitsabläufe geteilt und effizienter ausgeführt werden können.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Seitenansicht in
- Fig. 1: das erfindungsgemäße Transportfahrzeug in einer Transportposition;
- Fig. 2: das in Figur 1 gezeigte Transportfahrzeug in einer Entladeposition mit einer geneigten Ladefläche;
- Fig. 3: eine Variante des in Figur 1 gezeigten Transportfahrzeuges mit einer geteilten Heckklappe in einer Entladeposition.

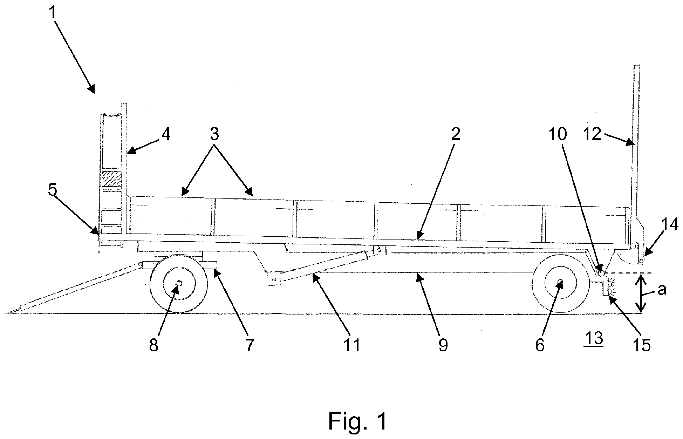

Das erfindungsgemäße Transportfahrzeug wird nachstehend anhand der Figuren 1 bis 3 näher erläutert.

Wie in Figur 1 zu erkennen, weist das als Anhänger ausgeführte Transportfahrzeug 1 eine ebene Ladefläche 2 auf, die durch Seitenwände 3 begrenzt ist, wobei die Seitenwände 3 wahlweise entfernt oder durch unterschiedliche Bauformen ersetzt werden können, um das Transportfahrzeug 1 an das Format des Ladegutes anzupassen. Desgleichen ist eine Stirnwand 4 in die Ladefläche 2 einsteckbar und kann an die Abschnitte der Seitenwände 3 angepasste Abmessungen haben. Um manuelle Arbeitsgänge zu erleichtern, ist benachbart zu der Ladefläche 2 eine begehbare Trittfläche 5 vorgesehen.

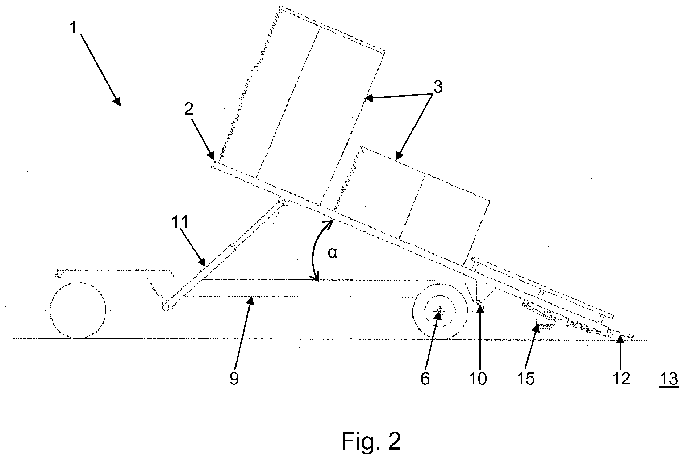

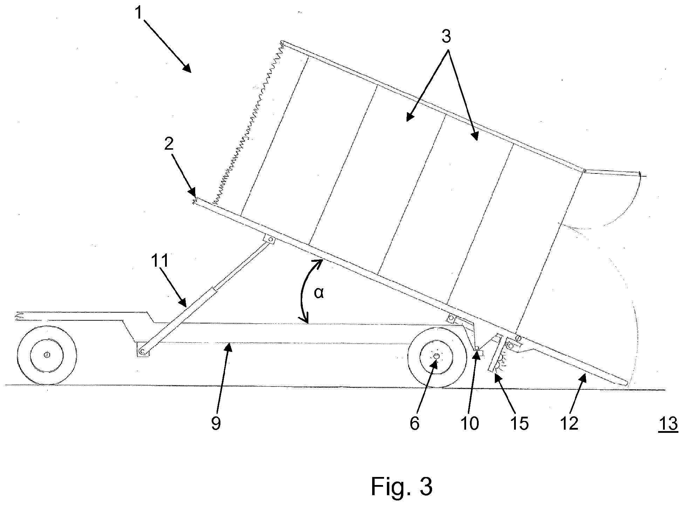

Die Ladefläche 2 ist auf einem eine Hinterachse 6 sowie einen Drehschemel 7 mit einer Vorderachse 8 tragenden Rahmengestell 9 des Transportfahrzeuges 1 um eine horizontale Schwenkachse 10 beweglich gelagert und mittels eines doppeltwirkenden Hubzylinders 11 in die in den Figuren 2 und 3 gezeigte Entladeposition beweglich. In dieser Entladeposition liegt eine Heckklappe 12 in ebener Verlängerung der Ladefläche 2 auf dem Boden 13 auf.

Es ist ersichtlich, dass die Ladefläche 2 nach hinten beträchtlich über die Schwenkachse 10 der Ladefläche 2 vorsteht und zudem einen vergleichsweise geringen Abstand a von dem Boden 13 aufweist. Hierdurch wird sichergestellt, dass sich der hintere Teil der Ladefläche 2 schon bei geringem Schwenkwinkel α dem Boden 13 nähert. Auf diese Weise gleitet das nicht gezeigte Ladegut schonend von der Ladefläche 2 bis auf den Boden 13 ab.

Indem das Ladegut in einem einzigen Arbeitsgang ohne Hilfsmittel von dem Transportfahrzeug 1 abgekippt wird, entfällt die Wartezeit wie bei einer nach dem Stand der Technik üblichen Einzelentladung, sodass das Transportfahrzeug 1 nicht blockiert wird und sofort wieder beladen bzw. zum Ladeort zurückgefahren werden kann.

Die Rückwand ist als schwenkbare Heckklappe 12 ausgebildet und kann in eine Lage ausgeschwenkt werden, in der sie eine Verlängerung der Ladefläche 2 bildet, wie dies in Figur 2 zu erkennen ist. Die Schwenkbewegung der Heckklappe 12 wird über einen nicht gezeigten Antrieb gesteuert, der ein als Hebel ausgeführtes Verbindungsteil 14 antreibt, auf dem die Heckklappe 12 lose aufliegt. Der Drehpunkt der Heckklappe 12 ist dabei so gewählt, dass diese in der Entladeposition der Ladefläche 2 mit dieser eine gemeinsame Ebene bildet.

Je nach zu transportierendem Ladegut können die Seitenwände 3, wie in Figur 3 erkennbar, gegen solche mit größerer Höhe ausgetauscht werden, die zugleich auch eine als Dach dienende Abdeckung tragen. Weiterhin kann die Heckklappe 12 geteilt ausgeführt sein, sodass ein kleinerer Teil nach oben verschwenkt werden kann und die Ladefläche 2 bei Straßenfahrt nach hinten verschließt.

Unterhalb der Ladefläche 2 ist ein Signalträger 15 für Lichtsignale und Kennzeichnungsmittel angeordnet, welcher um eine horizontale Achse schwenkbeweglich ist.

In der dargestellten Variante ist der Transportwagen als Anhänger ausgebildet. Im Bedarfsfall wäre es natürlich auch möglich, die dargestellte Anordnung an einem LKW-Sattelauflieger zu realisieren.

## Patentansprüche

1. Ein insbesondere für Einsatzzwecke in der Landwirtschaft bestimmtes Transportfahrzeug (1) mit einer zwischen einer im Wesentlichen horizontalen Transportposition und einer geneigten Entladeposition um eine horizontale Schwenkachse (10) schwenkbeweglichen Ladefläche (2), wobei die Schwenkachse (10) im Heckbereich des Transportfahrzeuges (1) hinter einer Hinterachse (6) mit einem Abstand (a) zum Boden (13) angeordnet ist, der geringer ist als der Durchmesser eines Hinterrades, und wobei die Ladefläche (2) im Heckbereich durch eine schwenkbewegliche, eine Rückwand bildende Heckklappe (12) begrenzt ist, welche in der Transportposition mit der Ladefläche (2) einen stumpfen Winkel einschließt und die in der Entladeposition mit der Ladefläche (2) flächenbündig positionierbar ist, **dadurch gekennzeichnet, dass** die Heckklappe (12) mittels eines Hebels schwenkbeweglich ausgeführt ist, indem der Hebel ein Auflager hat, auf dem die Heckklappe (12) nach oben frei beweglich aufliegt.

2. Transportfahrzeug (1) nach Anspruch 1, **dadurch gekennzeichnet, dass** der maximale Schwenkwinkel (α) der Ladefläche 35°, insbesondere 30°, nicht übersteigt.

3. Transportfahrzeug (1) nach den Ansprüchen 1 oder 2, **dadurch gekennzeichnet, dass** die Ladefläche (2) gegenüber der Schwenkachse (10) nach hinten vorspringend ausgeführt ist.

4. Transportfahrzeug (1) nach zumindest einem der vorhergehenden Ansprüche, **dadurch gekennzeichnet, dass** die Ladefläche (2) die Hinterachse (6) des Transportfahrzeuges (1) um ca. 1/3 der gesamten Länge der Ladefläche (2) überragt.

5. Transportfahrzeug (1) nach zumindest einem der vorhergehenden Ansprüche, **dadurch gekennzeichnet, dass** die Ladefläche (2) mittels zumindest eines an zumindest jeder Fahrzeugseite angeordneten Hubzylinders (11) schwenkbeweglich antreibbar ist.

6. Transportfahrzeug (1) nach zumindest einem der vorhergehenden Ansprüche, **dadurch gekennzeichnet, dass** an der Ladefläche (2) Begrenzungselemente (3, 4) zum Schutz des Ladegutes gegenüber unerwünschter Verlagerung fixierbar sind.

7. Transportfahrzeug (1) nach zumindest einem der vorhergehenden Ansprüche, **dadurch gekennzeichnet, dass** benachbart zu der Ladefläche (2) eine begehbare Trittfläche (5) angeordnet ist.

8. Transportfahrzeug (1) nach zumindest einem der vorhergehenden Ansprüche, **dadurch gekennzeichnet, dass** die Ladefläche (2) einen Signalträger (15) zur Aufnahme von Lichtsignalen und/oder Kennzeichnungsmitteln aufweist, welcher unterhalb der Transportebene der Ladefläche (2) um eine im Wesentlichen horizontale Achse schwenkbeweglich angeordnet ist.

9. Transportfahrzeug (1) nach zumindest einem der vorhergehenden Ansprüche, **dadurch gekennzeichnet, dass** die Ladefläche (2) mit einer reibungsmindernden Oberflächenbeschaffenheit, insbesondere einer Schicht aus einem reibungsmindernden Material ausgestattet ist.

## Claims

1. Transport vehicle (1) intended in particular for use in agriculture and having a loading surface (2) which is pivotable about a horizontal pivot axis (10) between a substantially horizontal transport position and an inclined unloading position, wherein the pivot axis (10) is arranged in the rear region of the transport vehicle (1) behind a rear axle (6) at a distance (a) from the ground (13), which distance is smaller than the diameter of a rear wheel, and wherein the loading surface (2) is bounded in the rear region by a pivotable tailgate (12) which forms a rear wall and, in the transport position, encloses an obtuse angle with the loading surface (2) and which, in the unloading position, can be positioned flush with the loading surface (2), **characterized in that** the tailgate (12) is designed so as to be pivotable by means of a lever by the lever having a support on which the tailgate (12) rests in a manner such that it is movable freely upwards.

2. Transport vehicle (1) according to Claim 1, **characterized in that** the maximum pivoting angle (α) of the loading surface does not exceed 35°, in particular 30°.

3. Transport vehicle (1) according to Claim 1 or 2, **characterized in that** the loading surface (2) is designed so as to project rearwards in relation to the pivot axis (10).

4. Transport vehicle (1) according to at least one of the preceding claims, **characterized in that** the loading surface (2) protrudes over the rear axle (6) of the transport vehicle (1) by approx. 1/3 of the entire length of the loading surface (2).

5. Transport vehicle (1) according to at least one of the preceding claims, **characterized in that** the loading surface (2) can be driven in a pivotable manner by means of at least one lifting cylinder (11) arranged on at least each side of the vehicle.

6. Transport vehicle (1) according to at least one of the preceding claims, **characterized in that** restricting elements (3, 4) for protecting the load against undesirable shifting can be fixed on the loading surface (2).

7. Transport vehicle (1) according to at least one of the preceding claims, **characterized in that** a treading surface (5) which can be walked on is arranged adjacent to the loading surface (2).

8. Transport vehicle (1) according to at least one of the preceding claims, **characterized in that** the loading surface (2) has a signal carrier (15) for receiving light signals and/or identification means, said signal carrier being arranged pivotably about a substantially horizontal axis below the transport plane of the loading surface (2).

9. Transport vehicle (1) according to at least one of the preceding claims, **characterized in that** the loading surface (2) is provided with a friction-reducing surface composition, in particular with a layer composed of a friction-reducing material.

## Revendications

1. Véhicule de transport (1) destiné à être utilisé en particulier en agriculture avec une surface de chargement (2) mobile par pivotement autour d'un axe de pivotement horizontal (10) entre une position de transport essentiellement horizontale et une position de déchargement inclinée, dans lequel l'axe de pivotement (10) est disposé dans la région arrière du véhicule de transport (1) derrière un essieu arrière (6) avec une distance (a) par rapport au sol (13), qui est plus petite que le diamètre d'une roue arrière, et dans lequel la surface de chargement (2) est limitée dans la région arrière par un clapet arrière pivotant (12) formant une paroi arrière, qui dans la position de transport forme avec la surface de chargement (2) un angle obtus et qui dans la position de déchargement peut être positionné à plat au niveau de la surface de chargement (2), **caractérisé en ce que** le clapet arrière (12) est réalisé de façon mobile par pivotement au moyen d'un levier, du fait que le levier comporte un appui, sur lequel le clapet arrière (12) repose de façon librement mobile vers le haut.

2. Véhicule de transport (1) selon la revendication 1, **caractérisé en ce que** l'angle de pivotement maximal (α) de la surface de chargement ne dépasse pas 35°, en particulier 30°.

3. Véhicule de transport (1) selon les revendications 1 ou 2, **caractérisé en ce que** la surface de chargement (2) est réalisée en saillie vers l'arrière par rapport à l'axe de pivotement (10).

4. Véhicule de transport (1) selon au moins une des revendications précédentes, **caractérisé en ce que** la surface de chargement (2) dépasse l'essieu arrière (6) du véhicule de transport (1) d'environ 1/3 de la longueur totale de la surface de chargement (2).

5. Véhicule de transport (1) selon au moins une des revendications précédentes, **caractérisé en ce que** la surface de chargement (2) peut être entraînée en mouvement de pivotement au moyen d'au moins un vérin de levage (11) disposé au moins sur chaque côté du véhicule.

6. Véhicule de transport (1) selon au moins une des revendications précédentes, **caractérisé en ce que** des éléments de limitation (3, 4) peuvent être fixés à la surface de chargement (2) pour protéger les marchandises chargées contre un déplacement indésirable.

7. Véhicule de transport (1) selon au moins une des revendications précédentes, **caractérisé en ce qu'**une surface accessible à pied (5) est disposée à proximité de la surface de chargement (2).

8. Véhicule de transport (1) selon au moins une des revendications précédentes, **caractérisé en ce que** la surface de chargement (2) présente un support de signaux (15) destiné à recevoir des signaux lumineux et/ou des moyens d'identification, qui est disposé de façon mobile par pivotement autour d'un axe essentiellement horizontal en dessous du plan de transport de la surface de chargement (2).

9. Véhicule de transport (1) selon au moins une des revendications précédentes, **caractérisé en ce que** la surface de chargement (2) est dotée d'un type de surface réduisant le frottement, en particulier d'une couche en un matériau réduisant le frottement.
